# EUROPÄISCHE PATENTSCHRIFT

(11) **EP 0 898 126 B1**
(45) Veröffentlichungstag und Bekanntmachung des Hinweises auf die Patenterteilung: **02.04.2003**
(21) Anmeldenummer: 98113737.5
(22) Anmeldetag: 23.07.1998
(51) Int. Cl.: F24H 9/20

(54) **Vorrichtung zur Brauchwassererwärmung**
Domestic water heating device
Dispositif de chauffage de l'eau sanitaire

(30) Priorität: 16.08.1997 DE 19735556
(43) Veröffentlichungstag der Anmeldung: 24.02.1999
(73) Patentinhaber: ROBERT BOSCH GMBH, 70442 Stuttgart (DE)
(72) Erfinder: Weil, Olaf, 4405 Valadares (PT); Hahn, Klaus-Wolf, 73278 Schlierbach (DE); Schricks, Heinz-Peter, 72379 Hechingen-Sicking (DE); Maucher, Beate, 71032 Boeblingen (DE)

(56) Entgegenhaltungen:
- DE-A- 2 451 009
- DE-A- 3 805 441
- DE-A- 19 539 879
- GB-A- 2 269 466
- GB-A- 2 281 381
- US-A- 4 713 525
- US-A- 4 757 943

## Beschreibung

### Stand der Technik

Die Erfindung geht aus von einer Vorrichtung zur Brauchwassererwärmung. Aus EP 0 358 173 B1 ist ein Warmwasserversorgungsgerät bekannt. Die Steuerung vergleicht Solltemperatur und Auslauftemperatur. Falls sich der Temperaturunterschied nicht innerhalb einer Minute ausgleicht, wird ein Steuerventil im Sinne einer Durchflußreduzierung angesteuert. Die beschriebene Vorgehensweise wiederholt sich solange, bis entweder die gewünschte Auslauftemperatur oder ein minimaler Durchflußwert erreicht sind. Die Steuerung schließt in letzterem Fall auf einen Fehler des Warmwasserversorgungsgeräts, stoppt den Vorgang und zeigt eine Fehlermeldung an. Die sukzessive Reduzierung des Durchflußsollwerts dauert relativ lang. Bis sich die gewünschte Auslauftemperatur einstellt, sind unter Umständen einige Regelzyklen notwendig. Besonders bei Wärmeerzeugern relativ geringer Leistung, die nicht sofort die gewünschte Auslauftemperatur zur Verfügung stellen können, ist dem Benutzer die relativ lange Aufwärmzeit nicht zuzumuten.

Aus GB 2 269 466 A ist eine Vorrichtung zur Brauchwassererwärmung bekannt mit einem Durchlauferhitzer, einem Auslauftemperatursensor und einem Sollwertgeber, über den eine Solltemperatur des auslaufenden Wassers vorgegeben wird, sowie mit einem den Durchfluss des Wassers beeinflussenden Durchflusssteller, der mittels eines Durchflusssollwertes angesteuert wird. Dabei ist ferner ein Prozessor vorgesehen, der anhand einer voreingestellten Auslasstemperatur und der erforderlichen Heizenergie einen Durchflusssollwert errechnet. Der aktuelle Durchfluss wird mit dem berechneten Durchflusssollwert verglichen und entsprechend über ein Ventil nachgestellt, so dass die gewünschte Auslasstemperatur konstant gehalten werden kann.

Ein weiteres Verfahren zum Konstanthalten der Auslauftemperatur bei Durchlauferhitzern geht aus DE 24 51 009 A1 hervor. Bei diesem Verfahren wird die stufenlos oder in Stufen mit einem Sollwertgeber eingestellte Solltemperatur mit einem Istwert der Wasserauslauftemperatur verglichen und hieraus eine Stellgröße abgeleitet, die einem Durchflusssteller zugeführt wird, der die in den Durchlauferhitzer einströmende Kaltwassermenge derart regelt, dass die Wasserauslauftemperatur konstant auf dem vorgegebenen Sollwert gehalten wird.

### Vorteile der Erfindung

Die erfindungsgemäße Vorrichtung zur Brauchwassererwärmung umfaßt die Merkmale des Anspruchs 1. Ein Durchflußsteller beeinflußt den Durchfluß des auslaufenden Wassers und ist im Sinne eines Durchflußsollwerts angesteuert. Die erfindungsgemäße Vorrichtung zeichnet sich dadurch aus, daß eine Differenz von Solltemperatur und Auslauftemperatur mit einem Grenzwert verglichen und in Abhängigkeit von dem Vergleich der Durchflußsollwert gebildet ist, so dass bei einer Überschreitung des Grenzwertes (G) der Durchfluss begrenzt wird. Durch den Grenzwert läßt sich die Abweichung von Solltemperatur und Auslauftemperatur bewerten. Liegt die Soll-Istabweichung innerhalb des vom Grenzwert gebildeten Toleranzbandes, wird auf Normalbetrieb geschlossen und als Durchflußsollwert ein Parameter gewählt, der diesem Normalbetrieb angepaßt ist. Liegt die Soll-Istdifferenz außerhalb des Toleranzbandes, läßt sich der Durchflußsollwert so vorgeben, daß eine rasche Erwärmung des auslaufenden Wassers erfolgen kann. Der Durchflußsollwert nimmt einen im Gegensatz zum Normalbetrieb relativ kleinen Wert an. Es wird ständig überprüft, ob sich die Soll-Istdifferenz nach Beginn des Zapfvorgangs innerhalb des Toleranzbandes befindet. In diesem Fall wird die Durchflußbegrenzung aufgehoben und dem Benutzer die gewünschte Zapfmenge zur Verfügung gestellt. Dadurch verringert sich die Aufwärmzeit. Der temperaturdifferenzabhängige Durchflußsollwert begegnet drohenden Temperaturüberschwingern der Auslauftemperatur.

In einer zweckmäßigen Weiterbildung ist eine Auswahleinheit vorgesehen, der erster und/oder zweiter Durchflußsollwert sowie ein dritter Durchflußsollwert, der von der Einlauftemperatur und der Solltemperatur abhängt, zugeführt sind. Sie wählt daraus den kleinsten Wert als Durchflußsollwert aus. Zumindest ein Durchflußsollwert hängt ab von dem Vergleich der Soll-Istdifferenz der Auslauftemperatur mit dem Grenzwert. Der dritte Durchflußsollwert berücksichtigt zusätzlich die Einlauftemperatur. Eine Ansteuerung im Sinne des minimal zulässigen Durchflußsollwerts stellt sicher, in möglichst kurzer Zeit die gewünschte Auslauftemperatur zu erreichen. Der dritte Durchflußsollwert gibt die maximal mögliche Zapfmenge in Abhängigkeit von der Temperaturdifferenz zwischen Solltemperatur und Einlauftemperatur und den Leistungsdaten des jeweiligen Durchlauferhitzers an. Ein größerer Durchflußsollwert als der dritte Durchflußsollwert würde eine bleibende Soll-Istabweichung der Auslauftemperatur hervorrufen. Dies verhindert jedoch die Auswahleinheit.

In einer vorteilhaften Ausgestaltung ist der Auswahleinheit ein über einen Durchflußsollwertgeber vorgebbarer Benutzerdurchflußsollwert zugeführt. Zum einen stellt die Auswahleinheit sicher, daß kein höherer Durchflußsollwert, als dies der dritte Durchflußsollwert als Obergrenze zuläßt, eine bleibende Soll-Istabweichung der Auslauftemperatur hervorruft. Zum anderen läßt sich die Aufwärmzeit beschleunigen, wenn eine den Grenzwert überschreitende Soll-Istauslauftemperaturabweichung zu einem reduzierten Durchflußsollwert führt.

In einer vorteilhaften Weiterbildung ist zu Beginn eines Zapfvorgangs als Durchflußsollwert für eine vorgebbare Dauer ein maximaler Durchflußsollwert verwendet. Nach einem Zapfvorgang wird beispielsweise Wärme von einem heißen Wärmetauscher auf das stehende, sich im Wärmetauscher befindliche Wasser übertragen. Dieses Wasser kommt beim erneuten Zapfen sehr heiß aus der Leitung und kann zu Verbrühungen führen. Zu Beginn des Zapfvorgangs baut sich dieses heiße Wasser rasch ab. Während dieser kurzen Zeitspanne kommt der Benutzer in der Regel nicht mit dem Wasser in Berührung.

In einer zweckmäßigen Maßnahme ist der Durchflußsteller aus zumindest zwei in parallelen Leitungen angeordneten Ventilen gebildet. Sie sind durch eine Bypassleitung umgehbar. Werden die Ventile lediglich in Auf-Zu-Stellung betrieben, läßt sich der Durchflußsollwert bereits innerhalb von vier Stufen einstellen. Auf eine kontinuierliche Positionsregelung der Ventile kann verzichtet werden. Die für die Realisierung notwendigen Komponenten sind einfach, robust und preiswert. Entsprechende Ansteuerschaltungen lassen sich ohne großen Aufwand realisieren.

Weitere zweckmäßige Weiterbildungen aus weiteren abhängigen Ansprüchen ergeben sich aus der Beschreibung.

### Zeichnung

Ausführungsbeispiele sind in der Zeichnung dargestellt und in der nachfolgenden Beschreibung näher erläutert. Es zeigen Figur 1 eine schematisch dargestellte Vorrichtung zur Brauchwassererwärmung, Figuren 2a und 2b mögliche Durchflußsollwertverläufe, Figur 3 ein Flußdiagramm eines weiteren Ausführungsbeispiels, Figuren 4a und 4b dazugehörige mögliche Durchflußsollwertverläufe, Figur 5a einen möglichen Durchflußsteller sowie Figur 5b den zugehörigen Signalverlauf.

### Beschreibung der Ausführungsbeispiele

Ein Einlauftemperatursensor 22 erfaßt eine Einlauftemperatur Te des im Wassereinlauf 20 fließenden Wassers. Nach einer nicht dargestellten Erwärmung wird das Wasser über einen Wasserauslauf 10 dem Nutzer zur Verfügung gestellt. Ein Auslauftemperatursensor 12 erfaßt eine Auslauftemperatur Ta. Über einen Sollwertgeber 30 läßt sich eine Solltemperatur Ts einstellen. Auslauftemperatur Ta, Solltemperatur Ts und Einlauftemperatur Te sind einer Signalverarbeitung 34 zugeführt, in der ein Grenzwert G hinterlegt ist. Die Signalverarbeitung 34 stellt einem Durchflußsteller 36 einen Durchflußsollwert Qs zur Verfügung.

In Abhängigkeit von der Differenz von Solltemperatur Ts und Auslauftemperatur Ta wird der Durchflußsollwert Qs gebildet. Übersteigt die Differenz von Solltemperatur Ts und Auslauftemperatur Ta den Grenzwert G, wird als Durchflußsollwert Qs ein erster Durchflußsollwert Q1, ansonsten ein zweiter Durchflußsollwert Q2 ausgewählt. Der Zusammenhang zwischen der Temperaturdifferenz von Solltemperatur Ts und Einlauftemperatur Te und dem zweiten Durchflußsollwert Q2 ist hyperbelförmig. Der zweite Durchflußsollwert Q2 steht beispielsweise für die maximal zulässige Zapfmenge.

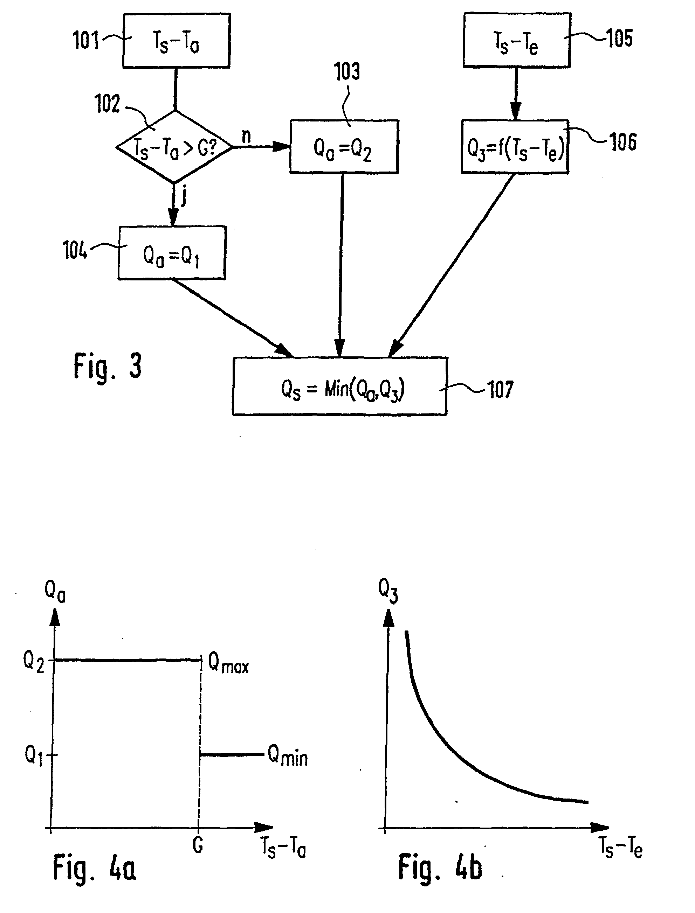

Figur 3 zeigt ein weiteres Ausführungsbeispiel als Ablaufdiagramm. Einer Auswahleinheit sind ein Auslaufdurchflußsollwert Qa und ein dritter Durchflußsollwert Q3 zugeführt. Der Auslaufdurchflußsollwert Qa nimmt in Abhängigkeit von der Differenz von Solltemperatur Ts und Auslauftemperatur Ta entweder den zweiten Durchflußsollwert Q2 oder den ersten Durchflußsollwert Q1 an. Der Zusammenhang zwischen der Temperaturdifferenz von Solltemperatur Ts und Einlauftemperatur Te und dem dritten Durchflußsollwert Q3 als maximal zulässige Zapfmenge ist wiederum hyperbelförmig.

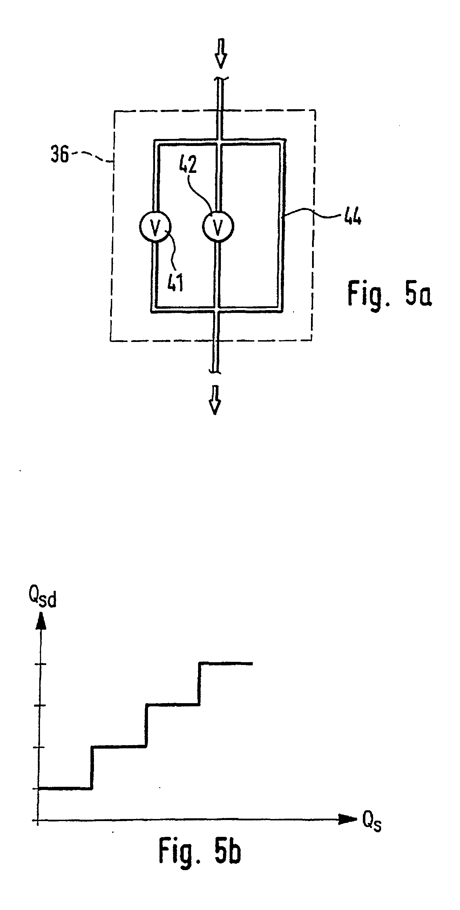

Das erwärmte Wasser wird dem Durchflußsteller 36 zugeführt. Es verteilt sich auf drei Leitungen, von denen zwei über ein erstes Ventil 41 und ein zweites Ventil 42 in ihrem Durchfluß verändert werden können. Die beiden Ventilleitungen umgeht ein Bypass 44. Figur 5b zeigt einen treppenförmigen Zusammenhang zwischen dem kontinuierlich ermittelten Durchflußsollwert Qs und einem diskreten Durchflußsollwert Qsd.

Ein Durchlauferhitzer erwärmt das einlaufende Wasser über einen Wärmetauscher. Der Durchflußsteller 36 ist beispielsweise durch ein stufenlos regelbares Ventil gebildet. Dessen Öffnungsstellung hängt ab von dem Durchflußsollwert Qs. Die Signalverarbeitung 34 erzeugt in Abhängigkeit von der Auslauftemperatur Ta, der Solltemperatur Ts, der Einlauftemperatur Te und dem Grenzwert G den Durchflußsollwert Qs.

Bei einer kontinuierlichen Regelung des Durchflusses ist auch der Istwert des Durchflusses zu erfassen und beispielsweise einem PID-Regler zuzuführen, der den das Ventil betätigenden Motor ansteuert. Jedoch wird im folgenden als Durchflußsollwert Qs sowohl der Sollwert einer Regelung als auch die Steuergröße einer Steuerung verstanden, wobei die Steuergröße so gewählt ist, daß sich der gewünschte Durchfluß einstellt.

In einem weiteren Ausführungsbeispiel erfaßt der Auslauftemperatursensor 12 die Auslauftemperatur Ta und führt sie der Signalverarbeitung 34 zu. Ein Benutzer stellt über den Sollwertgeber 30 die gewünschte Solltemperatur Ts ein, die ebenfalls der Signalverarbeitung 34 bekannt ist.

Die Differenz zwischen Solltemperatur Ts und Auslauftemperatur Ta wird mit dem Grenzwert G verglichen. Ziel dieses Vergleichs ist es, bei einer großen Temperaturabweichung von Solltemperatur Ts und Auslauftemperatur Ta, die beispielsweise im Bereich von 15 K liegt, den Durchfluß zu begrenzen. Befindet sich die Temperaturdifferenz außerhalb des vom Grenzwert G gebildeten Toleranzbandes, wird dem Durchflußsteller 36 als Durchflußsollwert Qs der erste Durchflußsollwert Q1 vorgegeben, der einen relativ niedrigen Wert annimmt. Der Durchfluß ist damit beispielsweise auf 4 l/min begrenzt, weshalb der Durchflußerhitzer das Wasser in relativ kurzer Zeit erwärmt. Unterschreitet die Temperaturdifferenz von Solltemperatur Ts und Auslauftemperatur Ta den Grenzwert G, so wird als Durchflußsollwert Qs der zweite Durchflußsollwert Q2 verwendet, der einen deutlich größeren Wert als der erste Durchflußsollwert Q1 annehmen kann.

In einer ersten alternativen Ausführungsform wird als zweiter Durchflußsollwert Q2 derjenige Wert verwendet, den der Benutzer über einen Durchflußsollwertgeber als Benutzerdurchflußsollwert Qb einstellt. Der Durchflußsollwertgeber kann als Wasserhahn direkt in den Durchfluß des Wasserkreises eingreifen. In diesem Fall ist als Durchflußsollwert Qs dem Durchflußsteller 36 der maximal mögliche Wert vorzugeben, da eine Durchflußbegrenzung, wie sie bei Überschreiten des Grenzwerts G durch die Temperaturdifferenz von Solltemperatur Ts und Auslauftemperatur Ta nötig wäre, nicht erforderlich ist. Der Benutzer entnimmt dem Warmwasserbereiter die von ihm eingestellte Zapfmenge.

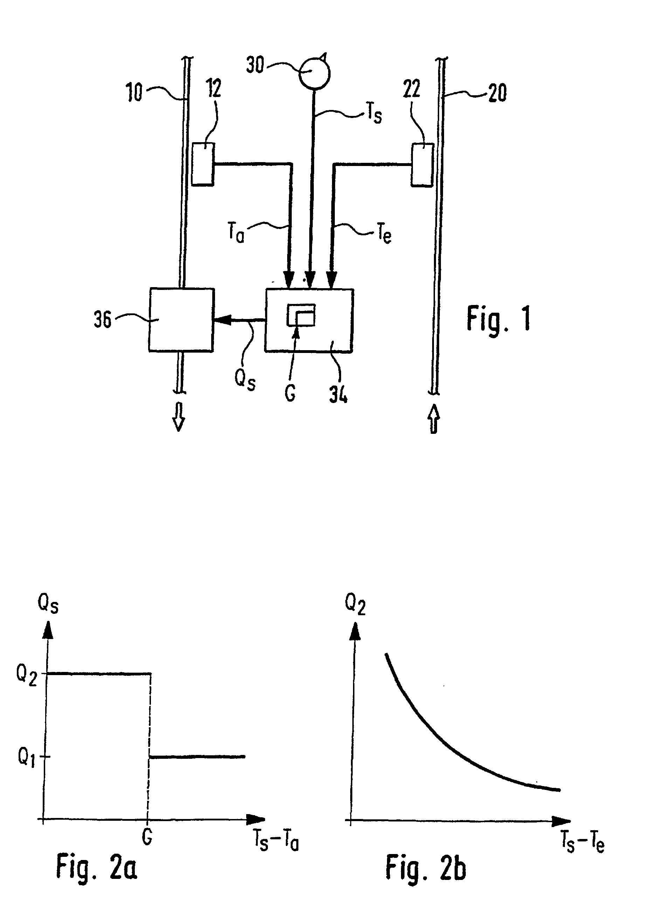

In einer Alternative hängt der zweite Durchflußsollwert Q2, der bei Unterschreiten des Grenzwerts G als Durchflußsollwert Qs dient, von der Temperaturdifferenz von Solltemperatur Ts und Einlauftemperatur Te ab. Der Zusammenhang findet sich in Figur 2b und ist beispielsweise als Hyperbel ausgebildet. Dieser Verlauf wird auch von den Leistungsdaten des Durchlauferhitzers beeinflußt. Die Kurve stellt den maximal möglichen Durchfluß dar, bei dem der Durchlauferhitzer gerade noch in der Lage ist, eine Auslauftemperatur Ta bereitzustellen, die der gewünschten Solltemperatur Ts entspricht. Wählt der Benutzer jedoch eine größere Zapfmenge als dies dem Kurvenverlauf entspricht, begrenzt der Durchflußsteller 36 den Durchfluß auf den maximal zulässigen Wert im Sinne des zweiten Durchflußsollwerts Q2, der von der Temperaturdifferenz von Solltemperatur Ts und Einlauftemperatur Te abhängt.

Ein weiteres Ausführungsbeispiel läßt sich Figur 3 entnehmen. In einem ersten Schritt 101 wird die Temperaturdifferenz von Solltemperatur Ts und Auslauftemperatur Ta gebildet. In der sich anschließenden Abfrage 102 wird diese Differenz mit dem Grenzwert G verglichen. Überschreitet die Temperaturdifferenz den Grenzwert G, wird in einem vierten Schritt 104 dem Auslaufdurchflußsollwert Qa der erste Durchflußsollwert Q1 zugewiesen zum Zwecke der Durchflußbegrenzung. Falls die Temperaturdifferenz innerhalb des vom Grenzwert G gebildeten Toleranzbandes verbleibt, nimmt der Auslaufdurchflußsollwert Qa den zweiten Durchflußsollwert Q2 an, wie aus Figur 4a ersichtlich. Der Auslaufdurchflußsollwert Qa ist einer Auswahleinheit zugeführt. Parallel zu diesen Vorgängen wird in einem fünften Schritt 105 die Temperaturdifferenz von Solltemperatur Ts und Einlauftemperatur Te gebildet. Der dritte Durchflußsollwert ermittelt sich gemäß Figur 4b in Abhängigkeit von der Temperaturdifferenz von Solltemperatur Ts und Einlauftemperatur Te und wird ebenfalls der Auswahleinheit mitgeteilt, Schritt 106. Die Auswahleinheit bestimmt in einem siebten Schritt 107 das Minimum von Auslaufdurchflußsollwert Qa und drittem Durchflußsollwert Q3. Der kleinste Wert dient dem Durchflußsteller 36 als Durchflußsollwert Qs. Damit ist sichergestellt, daß sich das Wasser zum einen rasch erwärmt und zum anderen auch tatsächlich die Solltemperatur Ts erreichen kann. Weisen Auslaufdurchflußsollwert Qa und dritter Sollwert Q3 den maximal möglichen Durchflußsollwert auf, öffnet der Durchflußsteller 36 zu 100 % und begrenzt damit den Durchfluß nicht. Diesem Vorgang läßt sich wiederum die benutzerabhängige Sollwertvorgabe überlagern.

Eine weitere alternative Ausführungsform ist dann möglich, wenn der vom Benutzer betätigte Durchflußsollwertgeber nicht unmittelbar mechanisch die Zapfmenge beeinflußt. Der einstellbare Benutzerdurchflußsollwert Qb ist dann ebenfalls der Auswahleinheit zugeführt. Sie wählt aus den drei vorgeschlagenen Durchflußsollwerten Qa, Q3, Qb den kleinsten aus und legt diesen als Durchflußsollwert Qs der Ansteuerung des Durchflußstellers 36 zugrunde. Dadurch ist ebenfalls gewährleistet, daß der Benutzerdurchflußsollwert Qb nicht die maximal zulässige Zapfmenge übersteigt.

Ein weiteres Ausführungsbeispiel ergänzt die vorhergehenden, indem zu Beginn des Zapfvorgangs als Durchflußsollwert Qs für eine vorgebbare Dauer ein Maximaldurchflußsollwert verwendet ist. Für kurze Zeit ist damit die Durchflußbegrenzung außer Kraft gesetzt. Das noch im Wärmetauscher befindliche heiße Wasser, welches bei einem Zapfvorgang zu Verbrühungen führen könnte, wird rasch abgebaut. Nach Ablauf der vorgegebenen Zeit wird der Durchflußsollwert Qs wie in den vorhergehenden Ausführungsbeispielen ermittelt.

In einem weiteren Ausführungsbeispiel ist der Durchflußsteller 36 gemäß Figur 5a aus drei parallel liegenden Leitungen gebildet, von denen zwei in ihrem Durchfluß über das erste und zweite Ventil 41, 42 beeinflußt werden. Die Ventile 41, 42 nehmen lediglich zwei Zustände ein, offen oder geschlossen. Die Leitungsquerschnitte sind beispielsweise so gewählt, daß über das erste Ventil 41 50 % des maximalen Durchflusses, der sich bei Öffnen aller Ventile einstellen würde, über das zweite Ventil 42 25 % und über die Bypassleitung 44 ebenfalls 25 % fließen können. Somit lassen sich vier Stufen realisieren, wobei, wie Figur 5b zu entnehmen, diese vier Stufen des diskreten Durchflußsollwerts Qsd von dem kontinuierlich ermittelten Durchflußsollwert Qs abhängen. Der Durchfluß kann auf 25 % begrenzt werden, indem beide Ventile 41, 42 geschlossen werden. Weitere Stufen liegen bei 50 % (erstes Ventil 41 geschlossen, zweites Ventil 42 geöffnet), 75 % (erstes Ventil 41 geöffnet, zweites Ventil 42 geschlossen) und 100 % (alle Ventile 41, 42 geöffnet). Überschreitet die Temperaturdifferenz von Solltemperatur Ts und Auslauftemperatur Ta den Grenzwert G, werden die Ventile 41, 42 im Sinne der 25 %-Begrenzung angesteuert. 50 %- und 75 %-Stufe werden in Abhängigkeit von der Temperaturdifferenz der Solltemperatur Ts und der Einlauftemperatur Te gebildet.

## Patentansprüche

1. Vorrichtung zur Brauchwassererwärmung,
- mit einem Durchlauferhitzer,
- mit einem Auslauftemperatursensor (12), der die Auslauftemperatur (Ta) des auslaufenden Wassers erfaßt,
- mit einem Sollwertgeber (30), über den eine Solltemperatur (Ts) des auslaufenden Wassers vorgebbar ist,
- mit einem den Durchfluß des Wassers beeinflussenden Durchflusssteiler (36), der im Sinne eines Durchflusssollwerts (Qs) angesteuert ist, **dadurch gekennzeichnet, daß** eine: Dif-Differenz von Solltemperatur (Ts) und Auslauftemperatur (Ta) mit einem Grenzwert (G) verglichen ist und dass in Abhängigkeit von dem Vergleich der Durchflusssollwert (Qs) gebildet ist, so dass bei einer Überschreitung des Grenzwertes (G) der Durchfluss begrenzt wird.

2. Vorrichtung nach Anspruch 1, **dadurch gekennzeichnet, daß** als Durchflußsollwert (Qs) dann ein erster Durchflußsollwert (Q1) verwendet ist, wenn die Differenz von Solltemperatur (Ts) und Auslauftemperatur (Ta) den Grenzwert (G) übersteigt, ansonsten ein zweiter Durchflußsollwert (Q2).

3. Vorrichtung nach einem der vorhergehenden Ansprüche,
**dadurch gekennzeichnet, daß** eine Auswahleinheit vorgesehen ist, der erster und/oder zweiter Durchflußsollwert (Q1, Q2), sowie ein dritter Durchflußsollwert (Q3), der von der Einlauftemperatur (Te) und der Solltemperatur (Ts) abhängt, zugeführt sind und die Auswahleinheit daraus den kleinsten Wert als Durchflußsollwert (Qs) auswählt.

4. Vorrichtung nach Anspruch 3, **dadurch gekennzeichnet, daß** der Auswahleinheit ein über einen Durchflußsollwertgeber vorgebbarer Benutzerdurchflußsollwert (Qb) zugeführt ist.

5. Vorrichtung nach einem der vorhergehenden Ansprüche, **dadurch gekennzeichnet, daß** ein eine Einlauftemperatur (Te) des einlaufenden Wassers erfassender Einlauftemperatursensor (22) vorgesehen ist, wobei der Durchflußsollwert (Qs) abhängt von der Einlauftemperatur (Te) und der Solltemperatur (Ts).

6. Vorrichtung nach einem der vorhergehenden Ansprüche 2 - 5, **dadurch gekennzeichnet, daß** der zweite Durchflußsollwert (Q2) abhängt von der Einlauftemperatur (Te) und der Solltemperatur (Ts).

7. Vorrichtung nach einem der vorhergehenden Ansprüche 2 bis 6 **dadurch gekennzeichnet, daß** der zweite Durchflußsollwert (Q2) durch den Benutzerdurchflußsollwert (Qb) gebildet ist.

8. Vorrichtung nach einem der vorhergehenden Ansprüche, **dadurch gekennzeichnet, daß** der Durchflußsollwert (Qs) abhängt von den Kenndaten des Wärmeerzeugers, der das Wasser erwärmt.

9. Vorrichtung nach einem der vorhergehenden Ansprüche, **dadurch gekennzeichnet, daß** zu Beginn eines Zapfvorgangs als Durchflußsollwert (Qs) während einer vorgebbaren Dauer ein Maximaldurchflußsollwert verwendet ist.

10. Vorrichtung nach einem der vorhergehenden Ansprüche, **dadurch gekennzeichnet, daß** als Durchflußsteller (36) ein Ventil verwendet ist.

11. Vorrichtung nach Anspruch 10, **dadurch gekennzeichnet, daß** der Durchflußsteller (36) aus zumindest zwei in parallelen Leitungen angeordneten Ventilen (41, 42) besteht.

12. Vorrichtung nach einem der Ansprüche 10 oder 11, **dadurch gekennzeichnet, daß** das oder die Ventile (41, 42) durch eine Bypassleitung (44) umgehbar sind.

## Claims

1. Device for service-water heating,
- with a flow heater,
- with an outflow-temperature sensor (12) which detects the outflow temperature (Ta) of the outflowing water,
- with a desired value generator (30), via which a desired temperature (Ts) of the outflowing water can be predetermined,
- with a throughflow adjuster (36) which influences the throughflow of the water and which is activated according to a desired throughflow value (Qs), **characterized in that** a difference between the desired temperature (Ts) and the outflow temperature (Ta) is compared with a limit value (G), and **in that** the desired throughflow value (Qs) is formed as a function of the comparision, so that, if the limit value (G) is exceeded, the throughflow is limited.

2. Device according to Claim 1, **characterized in that** a first desired throughflow value (Q1) is used as the desired throughflow value (Qs) when the difference between the desired temperature (Ts) and the outflow temperature (Ta) exceeds the limit value (G), otherwise a second desired throughflow value (Q2) is used.

3. Device according to one of the preceding claims, **characterized in that** a selection unit is provided, to which are supplied the first and/or the second desired throughflow value (Q1 Q2) and a third desired throughflow value (Q3) which is dependent on the inflow temperature (Te) and on the desired temperature (Ts), and the selection unit selects the lowest value from these as the desired throughflow value (Qs).

4. Device according to Claim 3, **characterized in that** a user desired throughflow value (Qb) predeterminable via a throughflow desired-value generator is supplied to the selection unit.

5. Device according to one of the preceding claims, **characterized in that** an inflow-temperature sensor (22) detecting an inflow temperature (Te) of the inflowing water is provided, the desired throughflow value (Qs) being dependent on the inflow temperature (Te) and on the desired temperature (Ts).

6. Device according to one of the preceding Claims 2 to 5, **characterized in that** the second desired throughflow value (Q2) is dependent on the inflow temperature (Te) and on the desired temperature (Ts).

7. Device according to one of the preceding Claims 2 to 6, **characterized in that** the second desired throughflow value (Q2) is formed by the user desired throughflow value (Qb).

8. Device according to one of the preceding claims, **characterized in that** the desired throughflow value (Qs) is dependent on the characteristic data of the heat generator which heats the water.

9. Device according to one of the preceding claims, **characterized in that**, at the commencement of a tapping operation, a maximum desired throughflow value is used as the desired throughflow value (Qs) for a predeterminable duration.

10. Device according to one of the preceding claims, **characterized in that** the throughflow adjuster (36) used is a valve.

11. Device according to Claim 10, **characterized in that** the throughflow adjuster (36) consists of at least two valves (41, 42) arranged in parallel lines.

12. Device according to one of Claims 10 or 11, **characterized in that** the valve or valves (41, 42) can be bypassed by means of a bypass line (44).

## Revendications

1. Dispositif pour chauffer de l'eau sanitaire comprenant :
- un chauffe-eau instantané,
- un capteur de température extérieure (12) qui détecte la température de sortie (Ta) de l'eau,
- un générateur de valeur de consigne (30) qui prédétermine une température de consigne (Ts) de l'eau préparée,
- un organe de réglage de débit (36) réglant le débit de l'eau et qui est commandé dans le sens d'une valeur de consigne de débit (Qs),
**caractérisé en ce que**
l'on compare une différence entre la température de consigne (Ts) et la température de sortie (Ta) à une valeur limite (G), et
en fonction de la comparaison on forme la valeur de consigne de débit (Qs) pour que le débit soit réduit en cas de dépassement de la valeur limite (G).

2. Dispositif selon la revendication 1,
**caractérisé en ce que**
la valeur de consigne de débit (Qs) utilise une première valeur de consigne de débit (Q1) si la différence entre la température de consigne (Ts) et la température de sortie (Ta) dépasse la valeur limite (G) et dans le cas contraire on utilise une seconde valeur de consigne de débit (Q2).

3. Dispositif selon l'une des revendications précédentes,
**caractérisé par**
une unité de sélection qui reçoit une première et/ou une seconde valeur de consigne de débit (Q1, Q2) ainsi qu'une troisième valeur de consigne de débit (Q3) dépendant de la température d'entrée (Te) et de la température de consigne (Ts), parmi lesquelles l'unité de sélection sélectionne la plus petite valeur comme valeur de consigne de débit (Qs).

4. Dispositif selon la revendication 3,
**caractérisé en ce que**
l'unité de sélection reçoit une valeur de consigne de débit d'utilisateur (Qb) prédéterminée par un générateur de valeur de consigne de débit.

5. Dispositif selon l'une des revendications précédentes,
**caractérisé par**
un capteur de température d'entrée (22) qui détecte la température d'entrée (Te) de l'eau d'entrée, la valeur de consigne de débit (Qs) dépendant de la température d'entrée (Te) et de la température de consigne (Ts).

6. Dispositif selon l'une des revendications précédentes 2 à 5,
**caractérisé en ce que**
la seconde valeur de consigne de débit (Q2) dépend de la température d'entrée (Te) et de la température de consigne (Ts).

7. Dispositif selon l'une des revendications précédentes 2 à 6,
**caractérisé en ce que**
la seconde valeur de consigne de débit (Q2) est formée par la valeur de consigne de débit d'utilisateur (Qb).

8. Dispositif selon l'une des revendications précédentes,
**caractérisé en ce que**
la valeur de consigne de débit (Qs) dépend des données caractéristiques du générateur de chaleur qui chauffe l'eau.

9. Dispositif selon l'une des revendications précédentes,
**caractérisé en ce qu'**
au début d'une opération de prélèvement d'eau on utilise comme valeur de consigne de débit (Qs) une valeur de consigne de débit maximum pendant une durée prédéterminée.

10. Dispositif selon l'une des revendications précédentes,
**caractérisé en ce que**
l'organe de réglage de débit (36) est une vanne.

11. Dispositif selon la revendication 10,
**caractérisé en ce que**
l'organe de réglage de débit (36) se compose d'au moins deux vannes (41, 42) dans deux conduites parallèles.

12. Dispositif selon l'une des revendications 10 ou 11,
**caractérisé en ce que**
la ou les vanne(s) (41, 42) peuvent être contournées par une conduite de dérivation (44).
